# EUROPEAN PATENT SPECIFICATION

(11) **EP 3 968 592 B1**
(45) Date of publication and mention of the grant of the patent: **07.01.2026**
(21) Application number: 20195992.1
(22) Date of filing: 14.09.2020
(51) Int. Cl.: G06F 21/57, H04L 9/40

(54) **METHOD AND SYSTEM FOR AUTOMATED AND DYNAMIC IT SYSTEM DISCOVERY**
VERFAHREN UND SYSTEM ZUR AUTOMATISCHEN UND DYNAMISCHEN ENTDECKUNG VON IT-SYSTEMEN
PROCÉDÉ ET SYSTÈME POUR LA DÉCOUVERTE AUTOMATISÉE ET DYNAMIQUE DE SYSTÈMES INFORMATIQUES

(43) Date of publication of application: 16.03.2022
(73) Proprietor: Deutsche Telekom AG, 53113 Bonn (DE)
(72) Inventor: SBEITI, Mohamad, 45657 Recklinghausen (DE); WILL, Niclas, 51109 Köln (DE); WELTERMANN, Bernd, 45359 Essen (DE); KLOTH, Mathias, 51429 Bergisch Gladbach (DE); LIPPMANN, Nico, 32351 Sternwede (DE)
(74) Representative: Braun-Dullaeus Pannen Emmerling Patent- & Rechtsanwaltspartnerschaft mbB

(56) References cited:
- US-A1- 2006 191 010
- US-A1- 2016 337 391
- US-A1- 2018 103 054
- US-A1- 2020 228 494

## Description

This invention relates to a method for automatic and dynamic determination of Information Technology (IT) systems belonging to an entity in order to evaluate the attack surface of the entity. Furthermore, this invention relates to a computer system and a computer product for automatic and dynamic determination of **IT** systems.

Security is a core need for digitization, in particular because due to Industry 4.0, Internet of Things (IoT) and new access technologies, such as 5G, the attack surface of entities is to become larger. For example, there have been 16 billion IoT connected devices in 2016 while 29 billion devices are forecast by 2022. Meanwhile, the number of successful large-scale cyber-attacks is rising (e.g. Emotet and WannaCry). In addition, the asymmetry in the cyberwarfare is increasing. The ability to harm enterprises, organizations and even states is increasing, despite those entities invest more in their defense infrastructure.

In this context one fundamental question for the adopters of digitization and new access technologies is, how they could be well equipped against security threats. Especially, the following three points pose an immense challenge, with which existing security measures and tools have not been able to cope:
- A detailed overview of own (entity) **IT** systems is decreasing due to the continuous boost of new online services and interconnected systems, combined with agile development methods and the emerging multi cloud deployment strategy.
- The number of discovered vulnerabilities is rapidly increasing, for example in the last two years an 88% increase in application vulnerabilities was witnessed. This curve is even expected to continue rising due to the growing number of services and products combined with the total increase of resources and capabilities in the area of vulnerability research.
- The large-scale exploitation time of vulnerabilities is decreasing. For example, two Common Vulnerability Exposures were successfully exploited within hours of a patch release (CVE-2018-2628 and CVE-2018-7602). This is due to the fact the number of online easy-to-use open-source exploitation tools and Proof-of-Concepts have become widespread.

Due to these developments and the limitation of existing solutions, malicious users with low level of expertise have become capable to hack large organizations.

To address the issues raised above, it is important to discover and evaluate the attack surface of an entity (company, organization, etc.) in real time. First, a comprehensive inventory of the IT infrastructure of the entity is automatically retrieved. Second, an enhanced in time vulnerability analysis and evaluation of the discovered IT infrastructure is performed. The information gathered is relevant for any company to accelerate management discussions and to take appropriate IT security decisions.

This patent application deals with the first point - namely, the automatic and dynamic asset discovery. This is an important point that enables an entity to always have an overview of their online assets, respectively IT systems (IP addresses, domains and subdomains) from an external point of view, in particular the view of malicious hackers.

US 2020/228494 A1 discloses a system and method for the automatic discovery of brand-owned domain names on the internet. The system uses a seed domain and queries WHOIS data and infrastructure data to identify related domain names. If the domain registration is private, the system performs infrastructure-based matching; otherwise, it uses WHOIS data. It employs an iterative process, performing reverse lookups to find additional domains by matching registration details such as email addresses. The system helps companies discover and protect their brand's domain names across multiple platforms and jurisdictions, aiding in domain name management and security.

The objective of the undelaying invention is to provide a method for automatic and dynamic determination of IT systems belonging to an entity which provides a comprehensive and up-to-date overview of the active/on-line IT system infrastructure of an entity in an efficient way, in particular wherein the determined **IT** system overview could be used for evaluation of the attack surface of the entity. Furthermore, it is an objective of this invention to provide a computer system, which is suitable to perform the method. Moreover, it is objective invention to provide a program product for automatic and dynamic determination of **IT** systems, when executed by the computer system, causes computer system to perform the method steps.

The underlying objective is solved by a method which has the features of the first claim. Advantageous embodiments of the invention are given by the dependent claims.

The method according to the invention comprises the following steps performed by a computer system:
- target name searching step, wherein a list of additional target names is generated by using an initial target name as input to a at least one first data source, in particular a merge and acquisition data base or a web search engine;
- a main domain query step, wherein a list of main domains, in particular second-level domains, is generated by using the initial target name and/or the additional target names as input to at least one second data source, in particular a web certificate database;
- a subdomain enumeration step, wherein a list of subdomains is generated by using the main domain names as input for at least one third data source, in particular a subdomain enumeration tool;
- a domain validation step, wherein validation features extracted from domains of the list of main domains and/or the list of subdomains are compared to at least one reference feature in order to determine the validity of the domains;
   wherein supportive features extracted from the domains of the list of main domains and/or the list of subdomains are evaluated by a machine learning unit in order to determine the validity of the domains; and
   wherein supportive features extracted form valid domains for which validity was determined on basis of the validation features are used to train the machine learning unit.

By performing the target name searching step preferably the list of additional target names is generated on basis of the initial target name, wherein the initial target name could be the name or title of the entity, e.g. "Deutsche Telekom" and may be defined by a user via an input device of the computer system or automatically by the computer system. The list of additional target names preferably contains other parts of the initial target name, like subsidiaries. For the determination of additional target names, the computer system access at least one first data source, for example a merge and acquisition database, like S&P Capital IQ, Amadeus or an official database/register (e.g. in Germany the Bundesanzeiger with the homepage "https://www.bundesanzeiger.de/"), or a search engine, like Google. By doing so the computer system efficiently generates a broad up-to-date overview of relevant subsidiaries.

On basis of the determined target names (initial and additional) the computer system generates the list of main domains by using the target names as input for a second data source. Preferably the second data source is a certificate database, like "https://crt.sh". Using such data sources, the computer system gets the latest main domains of the entity in an easy and efficient way. Main domains are for example second-level-domains, like "telekom.de".

The main domains are preferably used to generate the list of subdomains, wherein subdomains are for example "admin.telekom.de" or "test.telekom.de". The computer system gets those subdomains by access at least one of the third data source, for example a certificate database, like "https://crt.sh", or a Forward Domain Name System (FDNS) data base. Again, the advantage here is that the computer system receives the most recent data in a very efficient way.

The determined domains (main domains and subdomains) are validated within the domain validation step. For the domain name validation step validation features and supportive features are extracted from the listed domains, preferably automatically by the computer system. Preferably the validation features are information of the owner and/or assignee related to the domain, in particular wherein that information are extracted from Whois data, a certificate, an imprint and/or legally mandatory documents/websites, for example a privacy policy. The supportive features are preferably information that relates to the appearance of the domain, in particular wherein that information is extracted from Cascading Style Sheets, the used vocabulary and/or at least one Favicon. The computer system uses that information to determine whether the domain belongs to the entity (valid) or not (invalid), wherein the validation features (hard criteria) are used in a different way than the supportive features (soft criteria).

The validation features extracted from the domains of the list of main domains and/or the list of subdomains are compared to at least one reference feature in order to determine the validity of the domains, whereas the supportive features extracted from the domains of the list of main domains and/or the list of subdomains are evaluated by a supervised machine learning unit in order to determine the validity of the domains. A connection between both kind of features is realized by the machine learning unit, wherein supportive features extracted form valid domains for which validity was determined on basis of the validation features are used to train the machine learning unit. The machine learning unit is preferably implemented within the computer system and corresponds to a supervised machine learning algorithm, for example a random forest algorithm, or the like. This connection between both the validation features (hard criteria) and the supportive features (soft criteria) via a machine learning algorithm provides advantageously an efficient and reliable validation of the determined domains (main domains and/or subdomains).

According to an aspect of the invention the at least one reference feature is determined from a list of extracted validation features, in particular by a metric, where the reference feature is preferably most frequently listed feature; wherein each domain of the list of main domains and/or the list of subdomains that has an extracted validation feature that corresponds to the reference feature is considered as valid; and in particular wherein each domain of the list of main domains and/or the list of subdomains that has an extracted validation feature that does not correspond to the reference feature is considered as invalid. From the determined domains (main domains and/or subdomains) the validation features are extracted and listed. For example, the owner or assignees of a domain are extracted from the Whois information and listed. The reference feature is then determined from the list by usage of metric, in particular an absolute or relative metric. For example, the top five extracted validation features in terms of frequency are considered as reference features. **In** particular, the most frequent extracted validation feature of the list is considered as the reference feature. Each of the determined domain (main and/or subdomain) that has an extracted validation feature that corresponds to the at least one reference feature is considered as valid. On the contrary preferably each determined domain that does not have the at least one reference feature is considered as invalid. Advantageously, the validity is determined based on the validation features (hard criteria), leading to less false positive validations of domains.

According to an aspect of the invention the validity for each domain of the list of main domains and/or the list of subdomains for which the validation features are not available or not sufficient, is determined by the extracted supportive features of this domain by usage of the machine learning unit; in particular wherein this domain is considered as valid, if the machine learning unit predicts a probability that is above a defined threshold, and wherein this domain is considered as not determinable, if the machine learning unit predicts a probability that is below a defined threshold. When the validation features could not be extracted from the domains (main domains and/or subdomains), the machine learning unit is used for validation, wherein the extracted supportive features of those domains are used as input. Preferably the machine learning unit provides a probability value indicating the probability that the supportive features of the domain, respectively the appearance of the domain, correspond to a valid domain. When the probability is above a defined threshold, for example 80 %, the domain is considered as valid. If, on the other hand, the probability is below the limit, the domain is preferably considered as not determinable. Advantageously, this ensures that the validity of domains with no determinable validation features could be determined in a reliable and effective way.

According to an alternative aspect of the invention the extracted validation features are classified into cluster and the extracted validation features of the most frequent cluster corresponds to the reference features; and wherein each domain of the list of main domains and/or the list of subdomains that has an extracted validation feature that corresponds to the reference features are considered as valid. Preferably the most frequent cluster, respectively top clusters, are the clusters which have a size that exceeds a given threshold. For example, a top cluster could be a cluster having more than 100 domains with the extracted validation feature "Deutsche Telekom AG" in the certificate organization name. Preferably the clustering is performed by an unsupervised learning algorithm, for example Density-Based Spatial Clustering of Applications with Noise (DBSCAN). The extracted validation features of the top clusters are used for later validation of domains and those domains belonging to the top clusters are considered as valid. In particular the list of valid domains generated by classification and selection of top clusters is used as input for training of the machine learning unit.

According to an aspect of the invention the extracted validation features and the extracted supportive features for each domain of the list of main domains and/or the list of subdomains are used as input for the supervised machine learning algorithm; and in particular wherein this domain is considered as valid, if the machine learning unit predicts a probability that is above a defined first threshold; and/or wherein this domain is considered as invalid, if the machine learning unit predicts a probability that is below a defined second threshold; and/or wherein this domain is considered as not determinable, if the probability is between the first threshold and the second threshold. The validation of each domain is basically performed by the machine learning unit by usage of the extracted validation features and the extracted supportive features of the domain. The machine learning unit provides a probability value that this domain belongs to the respective entity. Preferably the domain is considered as valid, when the probability is above a first threshold, for example 85 %. On the other hand, a domain is preferably considered as invalid, when the probability is below a second threshold, for example 50 %. Probabilities between both thresholds are considered as not determinable. Advantageously, the validity is determined based on the validation features (hard criteria) and the supportive features (soft criteria), leading to less false negative validations of domains.

According to an aspect of the invention the method is comprising a domain name searching step, wherein new main domains and/or new subdomains are searched on basis of the valid domains of the list of main domains and/or the subdomains. Preferably information gathered of the valid domains are used to reversely obtain the new main domains with correlated information, wherein preferably techniques like Reverse Whois, Reverse Name Server, Reverse Mail Server, Used Technologies and/or search engines, like Shodan Favicon search, are used. The goal of the domain name searching step is to effectively and comprehensively find new domains (main domains and/or subdomains) which relate to the entity. Those new domains are obtained reversely by information gathered from valid domains. For example, the by Reverse Whois the owners or assignees of valid domains are used as input to get further (new) domain names of those owners. In a further example, Shodan Favicon search is performed, wherein the domains with the same Favicon are searched within a search engine, like Shodan. Advantageously, the number of domains to be considered is effectively extended, so that a complete picture of the present domains can be generated.

According to an aspect of the invention a validation of the new domains (main domains and/or subdomains) is performed. Preferably for each new main domain:
- it is checked whether the new main domain is resolvable (preferably by access to domain name system server) and if it is not resolvable the new main domain is considered as non-validatable; and/or
- it is checked by performing the validation step; in particular wherein
   when the new main domain name is considered as invalid, then break; in particular wherein when the new main domain name is considered as valid, then enumerate subdomains by performing the subdomain name enumeration step, validate the enumerated subdomain names by performing the validation step and search for new main domains and new subdomains by again performing the domain name searching step on the valid new subdomains; and in particular wherein when the new main domain is considered as not determinable, then enumerate subdomains by performing the subdomain name enumeration step at least partially, validate the enumerated subdomains by performing the validation step and consider the new main domain as valid if more than a defined percentage of the enumerated subdomains is valid.

By performance of at least one of the steps the determined new domains could be effectively validated.

According to an aspect of the invention the method is comprising an IP address searching step, wherein a list of IP addresses is generated by using the domains of the list of main domains and/or the list of subdomains as input to at least one fourth data source. The fourth data source is preferably a domain name system server. The goal of the IP address searching step it to effectively find and validate IP addresses belonging to the entity in order to get a comprehensive and up-to-date picture of IT systems belonging to the entity. The IP addresses are preferably obtained by performing a resolving step with the known domains (main domains and sub domains) by a request to the at least one fourth data source (e.g. DNS server). The result are the IP addresses that are linked to the known domains.

According to an aspect of the invention the IP addresses are validated. Preferably the valid domains of the list of main domains and/or the list of subdomains are resolved by access to the at least one fourth database, wherein it is checked for each IP address whether the IP address points to an invalid domain, when the IP address points to an invalid domain of the list of main domains, and/or the list of subdomains it is considered as invalid,
when the IP address does not point to an invalid domain of the list of main domains and/or list of subdomains it is considered as valid. In this way the validity could be effectively checked on the basis of the already checked domains.

According to an additional aspect of the invention further domains that are not the domains of the list of main domains and/or the list of subdomains are resolved by using the found IP address as input for at least one fourth database, wherein it is checked for each IP address whether there are further domains pointing to the IP address, when no further domains point to the IP address it is considered as valid, when further domains are pointing to the IP address the further domains are validated by performing the domain validation step in order to validate the IP address. Preferably a part of the further domains is validated by performing the domain validation step, if one of the part of further domains is invalid, the IP address is considered as invalid, if all of the part of further domains are valid, remaining further domains are validated by performing the domain validation step and if those are valid, the IP address is considered as valid, otherwise the IP address is considered as invalid. In this way, the number of domains taken into account is increased and a more complete picture of the IT systems is achieved.

According to an aspect of the invention the method is comprising a netblock searching step, wherein a list of netblocks is generated by using the initial target name, the additional target names, the main domains and/or the subdomains as input to at least one fifth data source, in particular a Regional Internet Registry or a Whois database. The goal of this step is the discovery and validation of netblocks / IP blocks, for example 80.158.67.0/16. By access of the fifth data source information related the netblock are collected. Preferably all netblocks or IP blocks are collected and validated on basis of netblock validation features, such as netname, description, registrant contact, registrant contact e-mail address, administrative contact or administrative contact e-mail address. Especially preferred a set of netblocks validation features are defined and an unsupervised learning (e.g. DBSCAN) / clustering algorithm is run to get the clusters based on those features. Then, the following algorithm is run the following algorithm is performed:
1) Go through the list of already validated IP addresses and for each 2 IP addresses or more belonging to the same netblock, the latter is considered valid in case the target entity (e.g. enterprise, organization) is not a hoster. If the target is a hoster, a statistical sufficient number of IP addresses in the netblock are validated to fulfill a threshold of a confidence level.
2) Check the netblock validity of netblocks in the same cluster. If a cluster contains both valid and invalid netblocks, the features based on which the netblocks are put together in that cluster are considered misleading and they will get ignored in further or re-clustering. If an amount greater a threshold (e.g., 80%) of the netblocks in a cluster is marked as valid, the cluster including all remaining netblocks are considered valid. If an amount of valid netblocks in the cluster is less than the threshold, thus, the other netblocks are not determinable yet, apply the clustering algorithm until a threshold of netblocks in the cluster are found to be valid, thereby, the whole cluster and remaining netblocks are marked as valid (or misleading features otherwise). Searching, clustering and validating netblocks has the advantage that other active IT systems that may belong to the entity can be effectively identified in order to obtain a comprehensive and up-to-date overview of the attack surface of the entity.

The underlying problem is also solved by a computer system for automatic and dynamic determination of Information Technology (IT) systems belonging to an entity, configured to perform the steps described above. The computer system is preferably one physical and/or logical server (cloud service) that is configured to perform the above described steps. In particular the computer system comprises several physical and/or logical server (cloud service), preferably deployed as computer cluster with several nodes.

The underlying problem is also solved by a computer program product for automatic and dynamic determination of IT systems belonging to an entity which, when executed by a computer system, causes the computer system to perform the above described method steps.

In the following, preferred embodiments of the present invention are described with reference to the figures:
- Fig. 1:: shows a schematic overview flow chart of underlying invention,
- Fig. 2:: shows a schematic flow chart of a first approach for a domain validation step,
- Fig. 3a:: shows a flow chart of a fist iteration of the domain validation according to the first approach,
- Fig. 3b: shows a flow chart of a further iteration of the domain validation according to the first approach,
- Fig. 4:: shows a schematic flow chart of a second approach for a domain validation step,
- Fig. 5a:: shows a flow chart of a fist iteration of the domain validation according to the second approach,
- Fig. 5b: shows a flow chart of a further iteration of the domain validation according to the second approach,
- Fig. 6: shows a schematic flow chart of a domain searching step,
- Fig. 7: shows a schematic flow chart of an IP address searching step, and
- Fig. 8a: shows a schematic flow chart of a netblock searching step that is performed when the netblock searching step is performed for the first time,
- Fig. 8b: shows a schematic flow chart of a netblock searching step that is performed when further iterations are performed.

Below, features of the invention are explained by way of a preferred embodiment. The present disclosure is not limited to the specifically named combinations of features. Rather, the features mentioned here can be combined arbitrarily into inventive embodiments, unless this is expressly excluded.

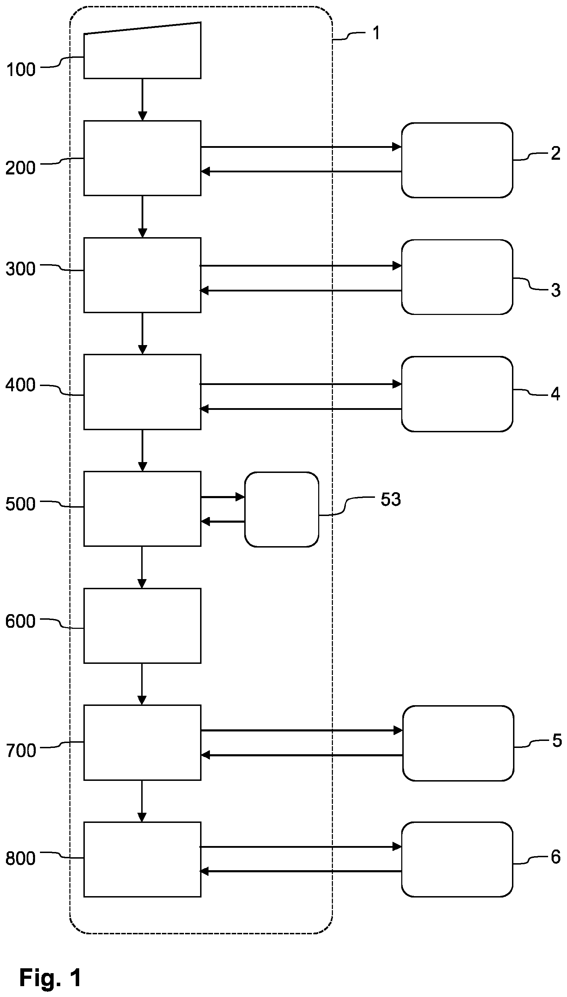

Fig. 1 shows a schematic overview of the method for automatic and dynamic determination of **IT** systems belonging to an entity, respectively company, enterprise, organization or the like. The method starts with the initial step 100, wherein an initial target name is defined. The initial target name could be the name or title of the entity, e.g. "Deutsche Telekom". A user could define the initial target name by an input device of a computer system 1 that performs the method, or it could be defined automatically by the computer system 1.

On basis of the initial target name a target name searching step 200 is performed, wherein a list of additional target names is generated. In order to search for the additional target names the computer system 1 uses the initial target name as input for a request to a first database 2. The first database 2 is for example a merge and acquisition database, such as S&P Capital IQ, Amadeus, official register (e.g. Bundesanzeiger) or the like. By access to the first database 2 the computer system 1 retrieves subsidiaries of the entity as additional target names and saves them within the list of additional target names.

The initial target name and the additional target names are used as basis for a main domain query step 300, wherein a list of main domains is generated. In order to obtain the main domains, the computer system 1 uses the initial target name and the additional target names as input for a request to a second database 3. The second database 3 is for example web certificate data base (e.g. https://crt.sh) or a search engine (e.g. google or wikipedia-api). By access to the second database 3 the computer system 1 retrieves main domains of the entity, including their subsidiaries. Main domains are in particular second level domains, e.g. "telekom.de" or "systems.de".

By usage of the queried main domains a subdomain enumeration step 400 is performed, wherein a list of subdomains is generated in addition to the existing list main domains. In order to enumerate the subdomains, the computer system 1 uses the main domains as input for a request to a third database 4. The third database 4 is for example a certificate data base (e.g. https://crt.sh), a subdomain enumeration tool or a passive domain name server database. By using the third database 4 the computer system 1 retrieves subdomains of the entity. Subdomains are in particular lower level domains, like "admin.telekom.de" or "test.telekom.de". The list of subdomains could be a part of the list of main domains, or a separate list.

The domains of the list of main domains and the list of subdomains are validated with a domain validation step 500, wherein the domains are considered as valid (belonging to entity), invalid (not belonging to entity) or not determinable, when the validity could not be determined.

For the determination of the validity of the domains validation features 51 are extracted from the domains. Validation features 51 of the domains are information of the owner and/or assignee of the domain, like a Whois information, a certificate information, an imprint information and/or a privacy policy information. On basis of validation feature 51 (hard criteria), the validity of the domains could be evaluated.

In addition, supportive features 52 are extracted from the domains and evaluated by a supervised machine learning unit 53 in order to determine the validity of the domains. Supportive features 52 of domains are information that relate to the appearance of the domain, like a Cascading Style Sheet information, a vocabulary information and/or a Favicon information of the domain. On basis of supportive validation feature 52 (soft criteria), the validity of the domains could be evaluated by usage of the supervised machine learning unit 53.

The supervised machine learning unit 53 is implemented within the computer system 1 and corresponds to a machine algorithm, for example a random forest algorithm or the like. The machine learning unit 53 is trained by supportive features 52 extracted from valid domains, wherein the validity was determined on basis of the validation features 51. By usage of the machine learning unit 53 a link between the validation features 51 and the supportive features 52 is realized.

Within the domain name searching step 600 new main domains and/or new subdomains are searched on the basis of the valid domains of the list of main domains and/or the list of subdomains. For the search of new main domains and/or subdomains the valid domains are used as input for reverse searching techniques. Examples for these techniques are: Reverse Whois, Reverse Name Server, Reverse Mail Server, Buit-With and/or a search engine, like a Shodan Favicon Search. The found new main domains and/or new subdomains are preferably added to the list of main domains and/or the list of subdomains and validated by usage of the domain validation step 500.

A list of IP addresses is generated on basis of the list the domains of the list of main domains and/or the list of subdomains within an IP address searching step 700. The computer system 1 uses the domains as input for a fourth database 5 in order to obtain the corresponding IP addresses. The fourth database 5 is preferably a domain name system (DNS) server, wherein the IP addresses are resolved on the basis of the domains. In a preferred embodiment the validity of the IP addresses is also evaluated within the IP address searching step 700. For that it is checked whether the IP address corresponds to a valid or invalid domain. The IP addresses of the list of IP addresses are considered as valid (belonging to entity), invalid (not belonging to entity), not determinable (when the validity could not be determined) or non-validatable.

In addition, a list of netblocks or IP blocks is generated within the netblock searching step 800. The computer system 1 uses the initial target name, the additional target names, the main domains and or the subdomains as input for a fifth database 6, wherein the fifth database is preferably an IP Whois database and/or a Regional Internet Registry, like the RIPE for Europe and Middle East. Preferably, all netblocks or IP blocks are collected and validated on basis of netblock validation features, such as netname, description, registrant contact, registrant contact e-mail address, administrative contact or administrative contact e-mail address.

The target name searching step 200, the main domain query step 300, the subdomain enumeration step 400, the domain validation step 500, the domain name searching step 600, the IP address searching step 700 and/or the netblock searching step 800 are repeated within iteration loops. The further iteration loop is stopped when no new active IT systems, respectively assets, are found.

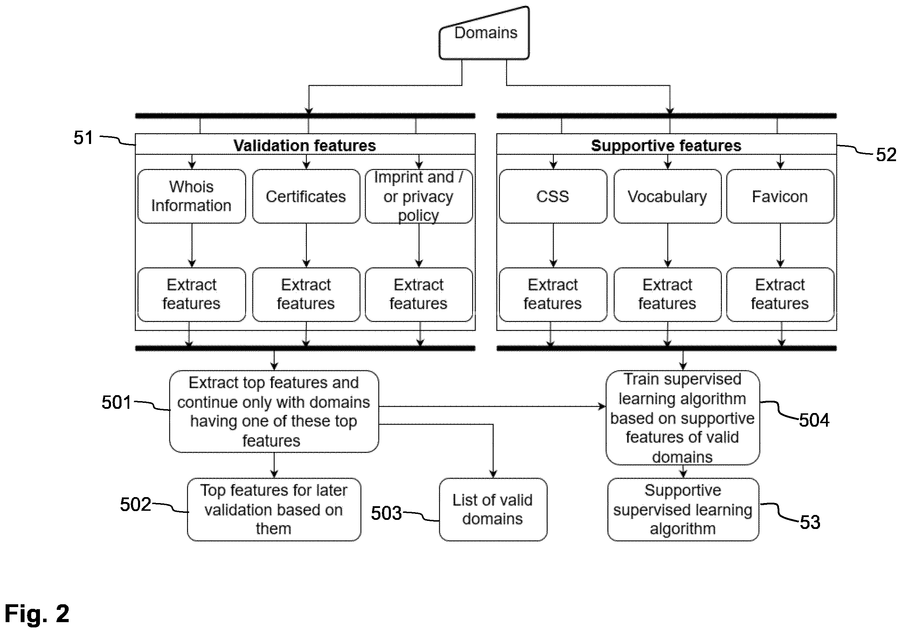

Fig. 2 shows a schematic flow chart of a first approach of the domain validation step 500. Validation features 51 are extracted from the domains of the list of main domains and/or the list of subdomains. Validation features 51 of the domains are information of the owner and/or assignee of the domain, like a Whois information, a certificate information, an imprint information and/or a privacy policy information. The extracted validation features are listed and the most frequent extracted validation features are determined, respectively extracted, as reference features or top features (step 501). Preferably those top features could be used for later validation (step 502). When a domain contains an extracted validation feature that corresponds to the top feature this domain is considered as valid and preferably listed in a list of valid domains (step 503). In addition, supportive validation features 52 that relate to the appearance of the domain, such as Cascading Style Sheet information, a vocabulary information and/or a Favicon information, are extracted. The supportive features 52 extracted from valid domains for which validity was determined on basis of the validation features 51 are used to train the supervised machine learning unit 53 (step 504).

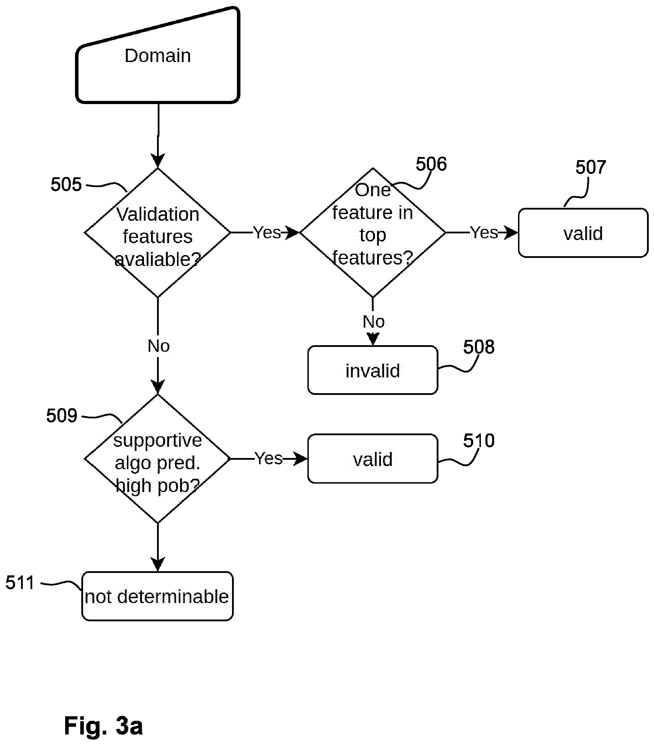

Fig. 3a shows a flow chart of a fist iteration of the domain validation according to the first approach. For each domain it is first checked whether validation features are available/extractable from the domain (step 505). If a validation feature is available, it is checked whether the extracted validation feature 51 is one of the top features, respectively reference features (step 506); if yes, the domain is considered as valid (step 507); if not, the domain is considered as invalid (508). If a validation feature 51 is not available, the validity is determined on basis of the extracted supportive domain features 52 (step 509); wherein the domain is considered as valid, if the machine learning unit 53 predicts a probability that is above a defined first threshold (step 510); and wherein this domain is considered as not determinable, if the machine learning unit 53 predicts a probability that is below a defined second threshold (step 511).

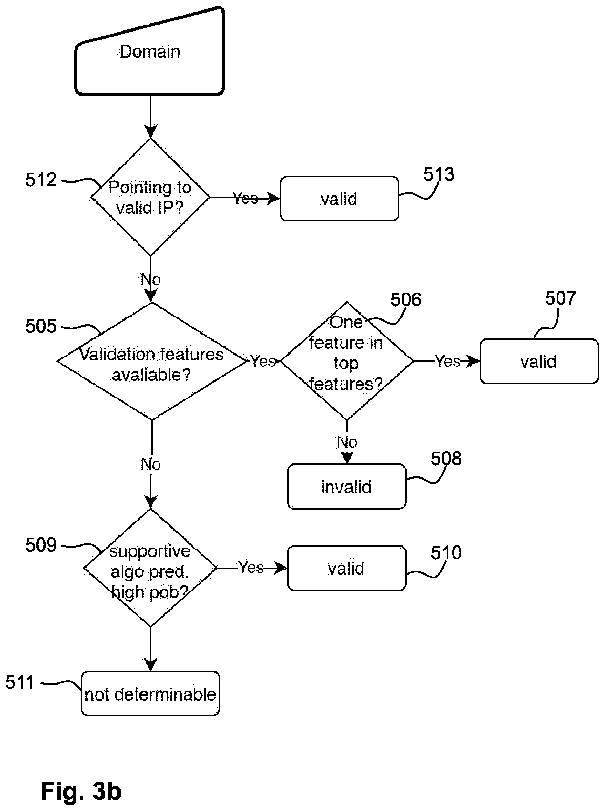

Fig. 3b shows a flow chart of further iteration of the domain validation according to the first approach. In addition to the first iteration it is first checked whether the domain is pointing to a valid **IP** address (step 512); if the domain points to a valid **IP** address the domain is considered as valid (513); if the domain does not point to a valid **IP** address it is checked whether validation features are available/extractable from the domain (step 505). Then the other steps described in Fig. 3a are performed.

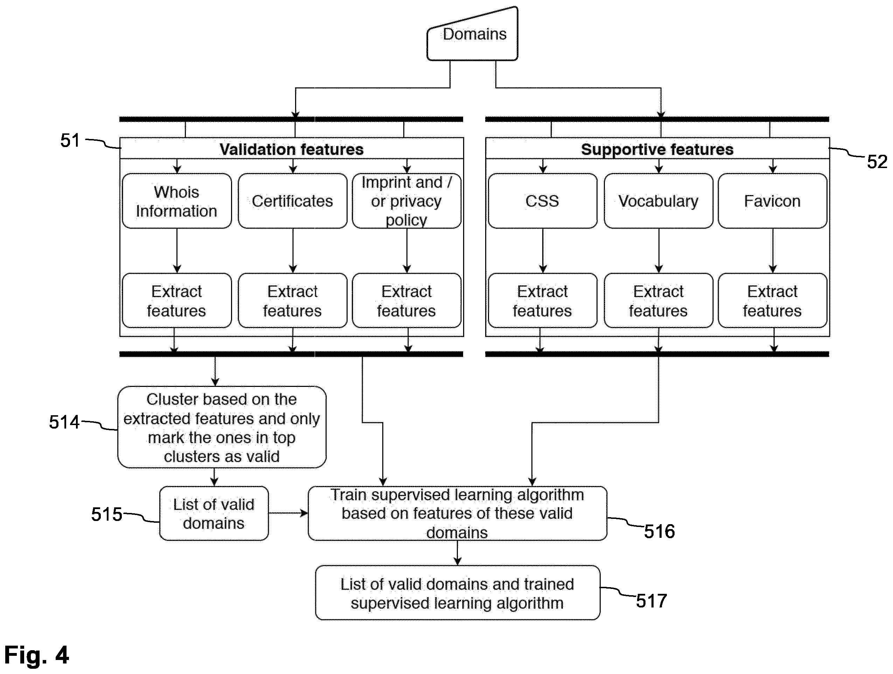

Fig. 4 shows a schematic flow chart of a second approach for a domain validation step. As within the first approach validation features 51 are extracted from the domains of the list of main domains and/or the list of subdomains. The extracted validation features are classified into cluster and the extracted validation features of the most frequent cluster are considered as top cluster or reference feature, wherein each domain that contains an extracted validation feature 51 that corresponds to the reference features is considered as valid (step 514). Preferably a list of valid domains is generated (step 515). In addition, supportive validation features 52 are extracted. The supportive features 52 extracted from valid domains for which validity was determined on basis of the validation features 51 are used to train the supervised machine learning unit 53 (step 516). On basis of the extracted validation features 51 and the extracted supportive features 52 it is determined by the machine learning unit 53, whether the domain is valid (step 517). Here preferably the extracted validation features 51 are higher weighted then the supportive features 52. The result of the second approach for the domain validation step is a list of valid domains and a trained machine learning unit 53.

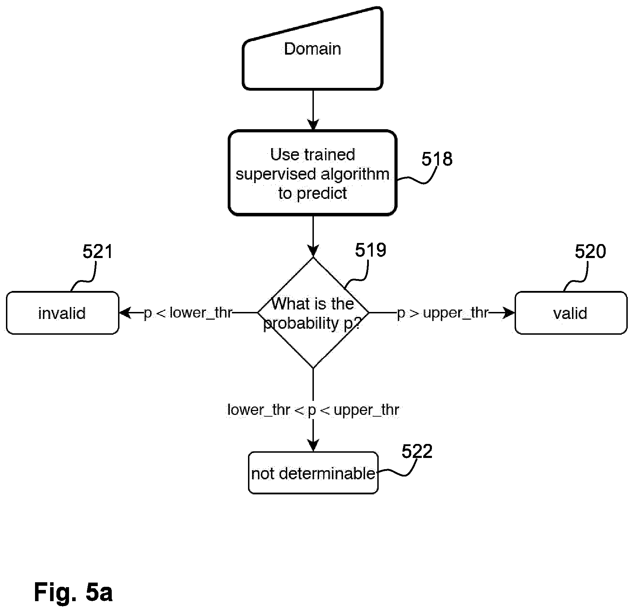

Fig. 5a shows a flow chart of a fist iteration of the domain validation according to the second approach. For each domain the trained machine learning unit 53 is used to predict a probability for validity on basis of the extracted validation features 51 and the extracted supportive features 52 (step 518). Then it is checked what probability has been predicted (step 519); wherein the domain is considered as valid, if the probability is above a defined first/upper threshold (step 520); wherein the domain is considered as invalid, if the probability is below a defined second/lower threshold (step 521); and wherein the domain is considered as not determinable, if the probability is between the first threshold and the second threshold (step 522).

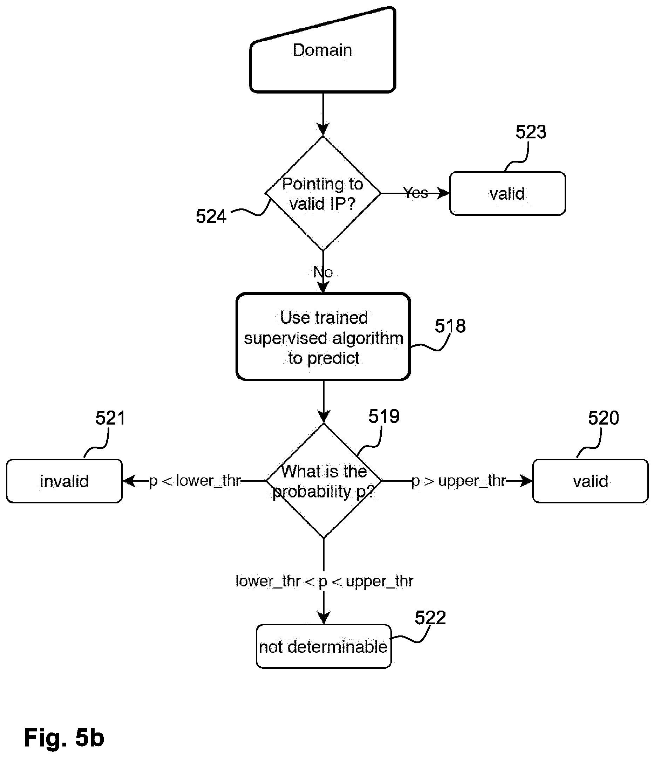

Fig. 5b shows a flow chart of a further iteration of the domain validation according to the second approach. In addition to the first iteration it is first checked whether the domain is pointing to a valid IP address (step 523); if the domain points to a valid IP address the domain is considered as valid (524); if the domain does not point to a valid IP address step 518 and the other steps described in Fig. 5a are performed.

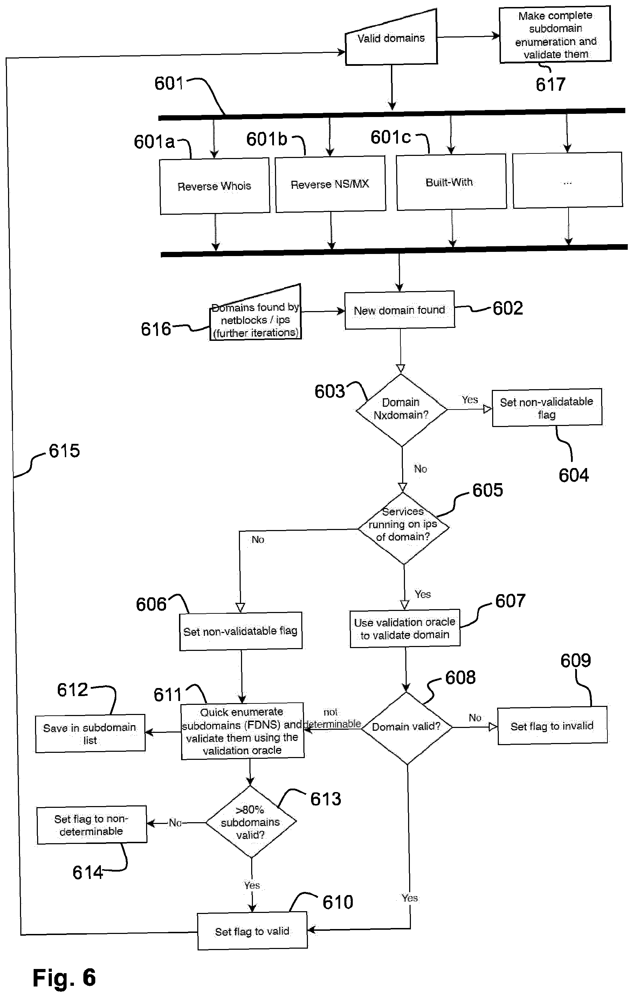

Fig. 6 shows a schematic flow chart of a domain searching step 600. New main domains and/or new subdomains are searched on the basis of the valid domains of the list of main domains and/or the list of subdomains (step 601). For the search of new main domains and/or subdomains the valid domains are used as input for reverse searching techniques, such as Reverse Whois (601a), Reverse Name Server (601b), Reverse Mail Server (601b), Buit-With (601c) and/or Shodan Favicon Search. The validity of the new found domains (602) is checked by the following steps. First it is checked whether the new domain is resolvable (step 603), wherein the domain is considered as non-validatable if the domain is not resolvable (step 604). When the domain is resolvable it is checked whether a service is running on the IP addresses of the domain (step 605); if a service is not running on the IP address a flag of the domain is set to non-validatable (step 606); and if a service is running on the IP address the domain validation step 500 is performed for the domain (step 607). Then it is check whether the domain valid (step 608); if the domain is considered as invalid preferably the flag of the domain is set to invalid (step 609); if the domain is considered as valid preferably the flag of the domain is set to valid (step 610); if the domain is considered as not-determinable a enumeration and validation of the subdomains is performed, preferably the subdomain enumeration step 400 is performed, wherein the domain validation step 500 is performed on the enumerated subdomains (step 611). The enumerated subdomains are saved within a list (step 612). In addition, it is checked whether a defined percentage (preferably 80 %) of the enumerated subdomains is valid (step 613); if no, the flag of the domain is set to non-determinable (step 614); if yes, the domain is considered as valid and the flag is set accordingly. The valid new domains are used as input for the domain searching step 600 (step 615), wherein a loop is generated. The loop is stopped, when no new valid domains could be found. When performing further iterations of the method, domains found by the IP address searching step 700 and/or the netblock searching step 800 are used as new domains and validated by the validation steps of the domain searching step 600 (step 616). Preferably the subdomain enumeration step 400 and the domain validation step 500 are performed on the new found domains (step 617).

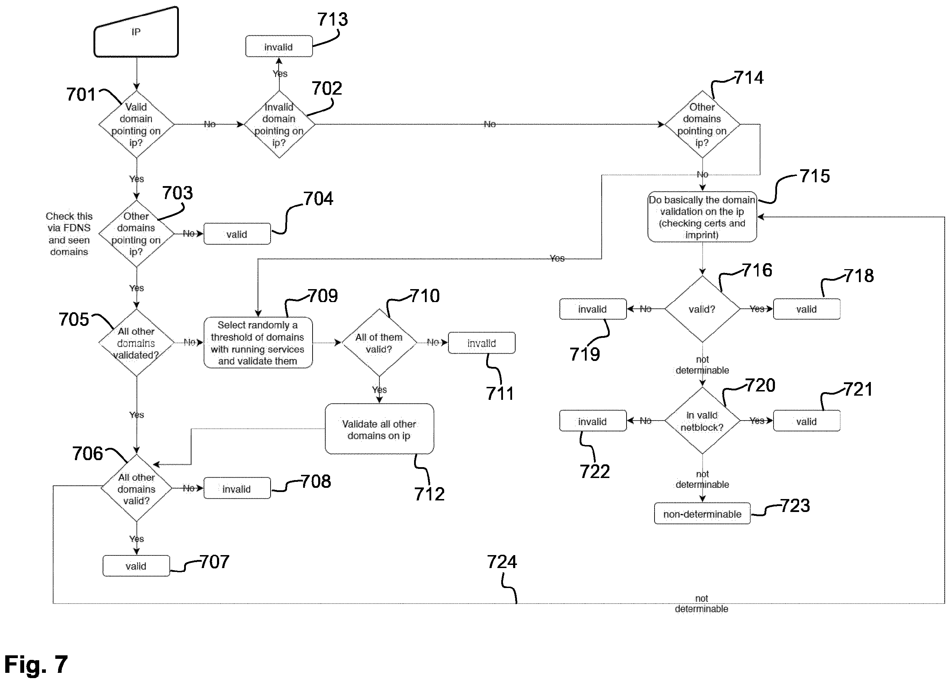

Fig. 7 shows a schematic flow chart of an embodiment of the IP address searching step 700. The input IP addresses are searched by using the domains of the list of main domains and/or the list of subdomains as input to at least one fourth data source 5, in particular a domain name system server. In addition, the input IP addresses result from the netblock or IP block searching step 800. First it is checked whether a valid domain is pointing to the IP address (step 701); if no, it is checked whether an invalid domain is pointing to the IP address (step 702); if yes, it is checked if other domains are pointing on the **IP** address by access to a Forward Domain Name System (FDNS) server and the already known domains (step 703). **If** no other domains are pointing on the **IP** address, the **IP** address is considered as valid (step 704). **If** other domains are pointing on the **IP** address, it is checked whether all other domains are validated (step 705); if yes, it is checked whether all other domains are valid (step 706). If all other domains are valid, the **IP** address is considered as valid (step 707); if no, the **IP** address is considered as invalid (step 708). **If** within step 705 it is determined that not all other domains have been validated, a defined percentage/part of the other domains with running services is validated by performing the domain validation step 500 (step 709). Preferably the defined percentage/part is 10 %. Then it is checked whether all of the validated percentage/part domains are valid (step 710); if no, the **IP** address is considered as invalid (step 711); if yes, the remaining other domains are validated by performing the domain validation step (step 712). Then it is checked whether all remaining other domains are valid (step 706); if yes, the **IP** address is considered as valid (step 707); if no, the **IP** address is considered as invalid (step 708).

When it is determined in step 702 that an invalid domain is pointing to the **IP** address, the **IP** address is considered as invalid (step 713). When it is determined in step 702 that no invalid domains are pointing to the **IP** address (which may be the case when the **IP** addresses result from the netblock or **IP** block searching step 800), it is checked whether other domains are pointing on the **IP** address (step 714); if yes, a defined percentage/part of the other domains with running services is validated by performing the domain validation step 500 (step 709); if no, do basically the domain validation on the **IP** address by preferably checking certificates and imprints (step 715). Then it is checked whether the **IP** address is valid (step 716); if yes, consider the **IP** address as valid (step 718); if no, consider the **IP** address as invalid (step 719); if the validity of the **IP** address is not determinable, it is further evaluated within a further iteration by checking whether the **IP** address is in a valid netblock (step 720). **If** it is in a valid netblock, it is considered as valid (step 721). **If** it is not in a valid netblock, it is considered as invalid (step 722). **If** it is not determinable whether it is in a valid netblock, the **IP** address is considered as not determinable (step 723). When it is found in step 706 that it is not determinable whether all other domains are valid, step 715 is performed (step 724).

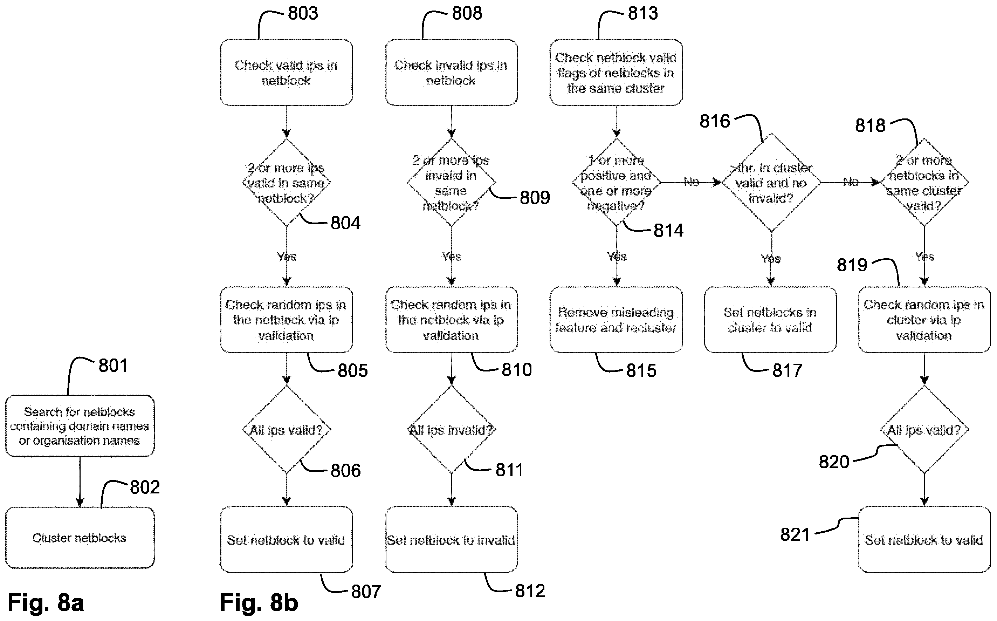

Fig. 8a and Fig. 8b show a schematic flow charts of a netblock searching step 800. The flow chart of Fig. 8a is performed when the netblock searching step 800 is performed for the first time. Here, netblocks containing known domains and/or target names are searched (step 801) in order to classify cluster of netblocks (step 802). The flow charts of Fig. 8b is executed when further iterations are performed. Valid IP addresses within the netblock are checked (step 803) by evaluating whether a certain number (preferably two) IP addresses of the netblock are valid (step 804); if yes, the validity of random IP addresses of the netblock is checked by performing the validation part of the IP address searching step 700 (step 805); when all IP addresses are valid (806), the netblock is considered as valid (step 807). Invalid IP addresses within the netblock are checked (step 808) by evaluating whether a certain number (preferably two) IP addresses of the netblock are invalid (step 809); if yes, the validity of random IP addresses of the netblock is checked by performing the validation part of the IP address searching step 700 (step 810). When all IP addresses are invalid (811), the netblock is considered as invalid (step 812). Preferably, netblocks valid flags of netblocks in the same cluster are checked (step 813). Then, it is checked whether one or more netblocks are positive and whether one or more netblocks are negative (step 814); if yes, misleading features are removed and the netblocks reclustered (step 815); if no, it is checked whether a defined threshold of netblocks in a cluster is valid and no netblocks are invalid (step 816). If the result of step 816 is yes, the netblocks within a cluster are set to valid (step 817); if no, it is checked whether two or more netblocks in the same cluster are valid (step 818). If two or more netblocks in the same cluster are valid, the validity of random IP addresses of the netblock is checked by performing the validation part of the IP address searching step 700 (step 819). If all IP addresses are valid (step 820), the netblock is set to valid (step 821).

### References

- 1: computer system
- 2: first data source
- 3: second data source
- 4: third data source
- 5: fourth data source
- 6: fifth data source

- 51: validation features
- 52: supportive features
- 53: machine learning unit

- 100: initial step
- 200: target name searching step
- 300: main domain query step
- 400: subdomain enumeration step
- 500: domain validation step
- 600: domain name searching step
- 700: IP address searching step
- 800: netblock searching step

## Claims

1. Method for automatic and dynamic determination of Information Technology, IT, systems belonging to an entity, comprising the following steps performed by a computer system (1):
- a target name searching step (200), wherein a list of additional target names is generated by using an initial target name that is the name or the title to the entity as input to a at least one first data source (2), in particular a merge and acquisition data base or a web search engine, wherein the list of additional target names is generated on basis of the initial target name;
- a main domain query step (300), wherein a list of main domains, in particular second-level domains, is generated by using the initial target name and/or the additional target names as input for a request to at least one second data source (3) to get the latest main domains of the entity;
- a subdomain enumeration step (400), wherein a list of subdomains is generated by using the main domain names as input for at least one third data source (4), in particular a subdomain enumeration tool;
- a domain validation step (500), wherein validation features (51) extracted from domains of the list of main domains and/or the list of subdomains are compared to at least one reference feature in order to determine the validity of the domains, wherein validity is determined if the extracted validation feature corresponds to the at least one reference feature;
wherein supportive features (52) that relate to an appearance of the domain are extracted from the domains of the list of main domains and/or the list of subdomains are evaluated by a machine learning unit (53) in order to determine the validity of the domains; and
wherein supportive features (52) extracted from valid domains for which validity was determined on basis of the validation features (51) are used to train the machine learning unit (53).

2. Method for automatic and dynamic determination of **IT** systems according to claim 1, wherein the at least one reference feature is determined from a list of extracted validation features (51), in particular by a metric, where the reference feature is preferably most frequently listed; wherein each domain of the list of main domains and/or the list of subdomains that has an extracted validation feature that corresponds to the reference feature is considered as valid; and in particular wherein each domain of the list of main domains and/or the list of subdomains that has an extracted validation feature that does not correspond to the reference feature is considered as invalid.

3. Method for automatic and dynamic determination of **IT** systems according to claims 1 or 2, wherein the validity for each domain of the list of main domains and/or the list of subdomains for which the validation features (51) are not available or not sufficient, is determined by the extracted supportive features (52) of this domain by usage of the machine learning unit (53);
in particular wherein this domain is considered as valid, if the machine learning unit (53) predicts a probability that is above a defined threshold, and wherein this domain is considered as not determinable, if the machine learning unit (53) predicts a probability that is below a defined threshold.

4. Method for automatic and dynamic determination of **IT** systems according to claim 1, wherein the extracted validation features (51) are classified into cluster and the extracted validation features (51) of the most frequent cluster corresponds to the reference features; and wherein each domain of the list of main domains and/or the list of subdomains that has an extracted validation feature (51) that corresponds to the reference features are considered as valid.

5. Method for automatic and dynamic determination of **IT** systems according to claims 1 and 4, wherein the extracted validation features (51) and the extracted supportive features (52) for each domain of the list of main domains and/or the list of subdomains are used as input for the machine learning algorithm (53); and in particular wherein this domain is considered as valid, if the machine learning unit (53) predicts a probability that is above a defined first threshold; and/or wherein this domain is considered as invalid, if the machine learning unit (53) predicts a probability that is below a defined second threshold; and/or wherein this domain is considered as not determinable, if the probability is between the first threshold and the second threshold.

6. Method for automatic and dynamic determination of **IT** systems according to one of the previous claims, wherein the validation features (51) are information of the owner and/or assignee related to the domain, in particular information extracted from Whois data, a certificate, an imprint and/or legally mandatory documents/websites, for example a privacy policy.

7. Method for automatic and dynamic determination of **IT** systems according to one of the previous claims, wherein the supportive features (52) are information that relate to the appearance of the domain, in particular information extracted from Cascading Style Sheets, the vocabulary used and/or at least one Favicon.

8. Method for automatic and dynamic determination of **IT** systems according to one of the previous claims, comprising a domain name searching step (600), wherein new main domains and/or new subdomains are searched on basis of the valid domains of the list of main domains and/or the subdomains, in particular wherein information of the valid domains are used to reversely obtain the new main domains with correlated information, wherein preferably techniques like Reverse Whois, Reverse Name Server, Reverse Mail Server, Used Technologies, search engines, like Shodan Favicon search, are used.

9. Method for automatic and dynamic determination of **IT** systems according to claim 8, wherein for each new main domain:
- it is checked whether the new main domain is resolvable and if it is not resolvable the new main domain is considered as non-validatable; and/or
- it is checked by performing the validation step (500), in particular wherein
when the new main domain name is considered as invalid, then break; in particular wherein
when the new main domain name is considered as valid, then enumerate subdomains by performing the subdomain name enumeration step (400), validate the enumerated subdomain names by performing the validation step (500) and search for new main domains and new subdomains by again performing the domain name searching step (600) on the valid new subdomains, and in particular wherein
when the new main domain is considered as not determinable, then enumerate subdomains by performing the subdomain name enumeration step (400) at least partially , validate the enumerated subdomains by performing the validation step (500) and consider the new main domain as valid if more than a defined percentage of the enumerated subdomains is valid.

10. Method for automatic and dynamic determination of **IT** systems according to one of the previous claims, comprising an **IP** address searching step (700), wherein a list of **IP** addresses is generated by using the domains of the list of main domains and/or the list of subdomains as input to at least one fourth data source (5), in particular a domain name system server.

11. Method for automatic and dynamic determination of **IT** systems according to claim 10, wherein the **IP** addresses of the valid domains of the list of main domains and/or the list of subdomains are resolved by access to the at least one fourth data source (5), wherein it is checked for each **IP** address whether the **IP** address points to an invalid domain,
when the **IP** address points to an invalid domain of the list of main domains, and/or the list of subdomains it is considered as invalid,
when the **IP** address does not point to an invalid domain of the list of main domains and/or list of subdomains it is considered as valid.

12. Method for automatic and dynamic determination of **IT** systems according to claim 11, wherein further domains that are not the domains of the list of main domains and/or the list of subdomains are resolved by using the **IP** address as input for at least one fourth data source(5), wherein it is checked for each **IP** address whether there are further domains pointing to the **IP** address,
when no further domains point to the **IP** address it is considered as valid,
when further domains are pointing to the **IP** address the further domains are validated by performing the domain validation step (500) in order to validate the **IP** address,
in particular wherein a part of the further domains is validated by performing the domain validation step (500),
if one of the part of further domains is invalid, the IP address is considered as invalid,
if all of the part of further domains are valid, remaining further domains are validated by performing the domain validation step (500) and if those are valid, the IP address is considered as valid, otherwise the IP address is considered as invalid.

13. Method for automatic and dynamic determination of IT systems according to one of the previous claims, comprising a netblock searching step (800), wherein a list of netblocks is generated by using the initial target name, the additional target names, the main domains and/or the subdomains as input to at least one fifth data source (6), in particular a Regional Internet Registry.

14. Computer system (1) for automatic and dynamic determination of Information Technology, IT, systems belonging to an entity, configured to perform the steps of claim 1.

15. Computer program product for automatic and dynamic determination of Information Technology, IT, systems belonging to an entity which, when executed by a computer system (1), causes the computer system (1) to perform the steps of claim 1.

## Patentansprüche

1. Verfahren zur automatischen und dynamischen Bestimmung von Informationstechnologie-, IT-, Systemen, die zu einer Entität gehören, umfassend die folgenden Schritte, durchgeführt von einem Computersystem (1):
- einen Zielnamen-Suchschritt (200), wobei unter Verwendung eines anfänglichen Zielnamens, der der Name oder der Titel der Entität ist, als Eingabe in mindestens eine erste Datenquelle (2), insbesondere eine Fusions- und Übernahmedatenbank oder eine Websuchmaschine, eine Liste von zusätzlichen Zielnamen erzeugt wird, wobei die Liste von zusätzlichen Zielnamen auf der Basis des anfänglichen Zielnamens erzeugt wird;
- einen Hauptdomain-Abfrageschritt (300), wobei unter Verwendung des anfänglichen Zielnamens und/oder der zusätzlichen Zielnamen als Eingabe für eine Anforderung an mindestens eine zweite Datenquelle (3), um die neuesten Hauptdomains der Entität zu erlangen, eine Liste von Hauptdomains, insbesondere Second-Level-Domains, erzeugt wird;
- einen Subdomain-Aufzählungsschritt (400), wobei unter Verwendung der Hauptdomainnamen als Eingabe für mindestens eine dritte Datenquelle (4), insbesondere ein Subdomain-Aufzählungswerkzeug, eine Liste von Subdomains erzeugt wird;
- einen Domain-Validierungsschritt (500), wobei aus Domains der Liste von Hauptdomains und/oder der Liste von Subdomains extrahierte Validierungsmerkmale (51) mit mindestens einem Referenzmerkmal verglichen werden, um die Gültigkeit der Domains zu bestimmen, wobei die Gültigkeit bestimmt wird, wenn das extrahierte Validierungsmerkmal dem mindestens einen Referenzmerkmal entspricht;
wobei aus den Domains der Liste von Hauptdomains und/oder der Liste von Subdomains unterstützende Merkmale (52), die sich auf ein Erscheinungsbild der Domain beziehen, extrahiert und durch eine Maschinenlerneinheit (53) ausgewertet werden, um die Gültigkeit der Domains zu bestimmen; und
wobei aus gültigen Domains extrahierte unterstützende Merkmale (52), für die die Gültigkeit auf der Basis der Validierungsmerkmale (51) bestimmt wurde, verwendet werden, um die Maschinenlerneinheit (53) zu trainieren.

2. Verfahren zur automatischen und dynamischen Bestimmung von IT-Systemen nach Anspruch 1, wobei das mindestens eine Referenzmerkmal aus einer Liste von extrahierten Validierungsmerkmalen (51) bestimmt wird, insbesondere durch eine Metrik, wobei das Referenzmerkmal vorzugsweise am häufigsten aufgelistet ist; wobei jede Domain der Liste von Hauptdomains und/oder der Liste von Subdomains, die ein extrahiertes Validierungsmerkmal aufweist, das dem Referenzmerkmal entspricht, als gültig betrachtet wird; und insbesondere wobei jede Domain der Liste von Hauptdomains und/oder der Liste von Subdomains, die ein extrahiertes Validierungsmerkmal aufweist, das nicht dem Referenzmerkmal entspricht, als ungültig betrachtet wird.

3. Verfahren zur automatischen und dynamischen Bestimmung von IT-Systemen nach Anspruch 1 oder 2, wobei die Gültigkeit für jede Domain der Liste von Hauptdomains und/oder der Liste von Subdomains, für die die Validierungsmerkmale (51) nicht verfügbar oder nicht ausreichend sind, durch die extrahierten unterstützenden Merkmale (52) dieser Domain unter Verwendung der Maschinenlerneinheit (53) bestimmt wird;
insbesondere wobei diese Domain als gültig betrachtet wird, wenn die Maschinenlerneinheit (53) eine Wahrscheinlichkeit vorhersagt, die über einem definierten Schwellenwert liegt, und wobei diese Domain als nicht bestimmbar betrachtet wird, wenn die Maschinenlerneinheit (53) eine Wahrscheinlichkeit vorhersagt, die unter einem definierten Schwellenwert liegt.

4. Verfahren zur automatischen und dynamischen Bestimmung von IT-Systemen nach Anspruch 1, wobei die extrahierten Validierungsmerkmale (51) in Cluster klassifiziert werden und die extrahierten Validierungsmerkmale (51) des häufigsten Clusters den Referenzmerkmalen entsprechen; und wobei jede Domain der Liste von Hauptdomains und/oder der Liste von Subdomains, die ein extrahiertes Validierungsmerkmal (51) aufweist, das den Referenzmerkmalen entspricht, als gültig betrachtet wird.

5. Verfahren zur automatischen und dynamischen Bestimmung von IT-Systemen nach Anspruch 1 und 4, wobei die extrahierten Validierungsmerkmale (51) und die extrahierten unterstützenden Merkmale (52) für jede Domain der Liste von Hauptdomains und/oder der Liste von Subdomains als Eingabe für den Maschinenlernalgorithmus (53) verwendet werden; und insbesondere wobei diese Domain als gültig betrachtet wird, wenn die Maschinenlerneinheit (53) eine Wahrscheinlichkeit vorhersagt, die über einem definierten ersten Schwellenwert liegt; und/oder wobei diese Domain als ungültig betrachtet wird, wenn die Maschinenlerneinheit (53) eine Wahrscheinlichkeit vorhersagt, die unter einem definierten zweiten Schwellenwert liegt; und/oder wobei diese Domain als nicht bestimmbar betrachtet wird, wenn die Wahrscheinlichkeit zwischen dem ersten Schwellenwert und dem zweiten Schwellenwert liegt.

6. Verfahren zur automatischen und dynamischen Bestimmung von IT-Systemen nach einem der vorhergehenden Ansprüche, wobei die Validierungsmerkmale (51) Informationen über den Eigentümer und/oder Zessionar in Bezug auf die Domain sind, insbesondere Informationen, die aus Whois-Daten, einem Zertifikat, einem Impressum und/oder gesetzlich vorgeschriebenen Dokumenten/Webseiten, zum Beispiel einer Datenschutzrichtlinie, extrahiert werden.

7. Verfahren zur automatischen und dynamischen Bestimmung von IT-Systemen nach einem der vorhergehenden Ansprüche, wobei die unterstützenden Merkmale (52) Informationen sind, die sich auf das Erscheinungsbild der Domain beziehen, insbesondere Informationen, die aus Cascading Style Sheets, dem verwendeten Vokabular und/oder mindestens einem Favicon extrahiert werden.

8. Verfahren zur automatischen und dynamischen Bestimmung von IT-Systemen nach einem der vorhergehenden Ansprüche, umfassend einen Domainnamen-Suchschritt (600), wobei neue Hauptdomains und/oder neue Subdomains auf der Basis der gültigen Domains der Liste von Hauptdomains und/oder der Subdomains gesucht werden, insbesondere wobei Informationen der gültigen Domains verwendet werden, um rückwärts die neuen Hauptdomains mit korrelierten Informationen zu erhalten, wobei vorzugsweise Techniken wie Reverse Whois, Reverse Name Server, Reverse Mail Server, Used Technologies, Suchmaschinen, wie Shodan Favicon-Suche, verwendet werden.

9. Verfahren zur automatischen und dynamischen Bestimmung von IT-Systemen nach Anspruch 8, wobei für jede neue Hauptdomain:
- geprüft wird, ob die neue Hauptdomain auflösbar ist, und wenn sie nicht auflösbar ist, die neue Hauptdomain als nicht validierbar betrachtet wird; und/oder
- geprüft wird, indem der Validierungsschritt (500) durchgeführt wird, insbesondere wobei, wenn der neue Hauptdomainname als ungültig betrachtet wird, dann abgebrochen wird; insbesondere wobei
wenn der neue Hauptdomainname als gültig betrachtet wird, dann Subdomains aufgezählt werden, indem der Subdomainnamen-Aufzählungsschritt (400) durchgeführt wird, die aufgezählten Subdomainnamen validiert werden, indem der Validierungsschritt (500) durchgeführt wird, und nach neuen Hauptdomains und neuen Subdomains gesucht wird, indem der Domainnamen-Suchschritt (600) erneut an den gültigen neuen Subdomains durchgeführt wird; und insbesondere wobei
wenn die neue Hauptdomain als nicht bestimmbar betrachtet wird, dann Subdomains aufgezählt werden, indem der Subdomainnamen-Aufzählungsschritt (400) zumindest teilweise durchgeführt wird, die aufgezählten Subdomains validiert werden, indem der Validierungsschritt (500) durchgeführt wird, und die neue Hauptdomain als gültig betrachtet wird, wenn mehr als ein definierter Prozentsatz der aufgezählten Subdomains gültig ist.

10. Verfahren zur automatischen und dynamischen Bestimmung von IT-Systemen nach einem der vorhergehenden Ansprüche, umfassend einen IP-Adressen-Suchschritt (700), wobei unter Verwendung der Domains der Liste von Hauptdomains und/oder der Liste von Subdomains als Eingabe für mindestens eine vierte Datenquelle (5), insbesondere einen Domainnamenssystem-Server, eine Liste von IP-Adressen erzeugt wird.

11. Verfahren zur automatischen und dynamischen Bestimmung von IT-Systemen nach Anspruch 10, wobei die IP-Adressen der gültigen Domains der Liste von Hauptdomains und/oder der Liste von Subdomains durch Zugriff auf die mindestens eine vierte Datenquelle (5) aufgelöst werden, wobei für jede IP-Adresse geprüft wird, ob die IP-Adresse auf eine ungültige Domain zeigt,
wenn die IP-Adresse auf eine ungültige Domain der Liste von Hauptdomains und/oder der Liste von Subdomains zeigt, sie als ungültig betrachtet wird,
wenn die IP-Adresse nicht auf eine ungültige Domain der Liste von Hauptdomains und/oder der Liste von Subdomains zeigt, sie als gültig betrachtet wird.

12. Verfahren zur automatischen und dynamischen Bestimmung von IT-Systemen nach Anspruch 11, wobei weitere Domains, die nicht die Domains der Liste von Hauptdomains und/oder der Liste von Subdomains sind, unter Verwendung der IP-Adresse als Eingabe für mindestens eine vierte Datenquelle (5) aufgelöst werden, wobei für jede IP-Adresse geprüft wird, ob es weitere Domains gibt, die auf die IP-Adresse zeigen,
wenn keine weiteren Domains auf die IP-Adresse zeigen, sie als gültig betrachtet wird,
wenn weitere Domains auf die IP-Adresse zeigen, die weiteren Domains validiert werden, indem der Domain-Validierungsschritt (500) durchgeführt wird, um die IP-Adresse zu validieren,
insbesondere wobei ein Teil der weiteren Domains validiert wird, indem der Domain-Validierungsschritt (500) durchgeführt wird,
wenn eine des Teils von weiteren Domains ungültig ist, die IP-Adresse als ungültig betrachtet wird,
wenn alle des Teils von weiteren Domains gültig sind, verbleibende weitere Domains validiert werden, indem der Domain-Validierungsschritt (500) durchgeführt wird, und wenn diese gültig sind, die IP-Adresse als gültig betrachtet wird, andernfalls die IP-Adresse als ungültig betrachtet wird.

13. Verfahren zur automatischen und dynamischen Bestimmung von IT-Systemen nach einem der vorhergehenden Ansprüche, umfassend einen Netzblock-Suchschritt (800), wobei unter Verwendung des anfänglichen Zielnamens, der zusätzlichen Zielnamen, der Hauptdomains und/oder der Subdomains als Eingabe für mindestens eine fünfte Datenquelle (6), insbesondere ein regionales Internet-Register, eine Liste von Netzblöcken erzeugt wird.

14. Computersystem (1) zur automatischen und dynamischen Bestimmung von Informationstechnologie-, IT-, Systemen, die zu einer Entität gehören, das dazu eingerichtet ist, die Schritte von Anspruch 1 durchzuführen.

15. Computerprogrammprodukt zur automatischen und dynamischen Bestimmung von Informationstechnologie-, IT-, Systemen, die zu einer Entität gehören, das, wenn es von einem Computersystem (1) ausgeführt wird, das Computersystem (1) dazu veranlasst, die Schritte von Anspruch 1 durchzuführen.

## Revendications

1. Procédé de détermination automatique et dynamique des systèmes informatiques (IT) appartenant à une entité, comprenant les étapes suivantes exécutées par un système informatique (1) :
- une étape de recherche de nom cible (200), dans laquelle une liste de noms cibles supplémentaires est générée en utilisant un nom cible initial qui est le nom ou le titre de l'entité comme entrée pour une requête dans au moins une première source de données (2), notamment une base de données de fusion-acquisition ou un moteur de recherche Web, dans laquelle la liste de noms cibles supplémentaires est générée sur la base du nom cible initial ;
- une étape d'interrogation de domaine principal (300), dans laquelle une liste de domaines principaux, notamment de deuxième niveau, est générée en utilisant le nom cible initial et/ou des noms cibles supplémentaires comme entrée pour une requête dans au moins une deuxième source de données (3) afin d'obtenir les domaines principaux les plus récents de l'entité ;
- une étape d'énumération des sous-domaines (400), dans laquelle une liste de sous-domaines est générée en utilisant les noms de domaine principaux comme entrée pour une requête au moins une troisième source de données (4), notamment un outil d'énumération de sous-domaines ;
- une étape de validation de domaine (500), dans laquelle des fonctions de validation (51) extraites des domaines de la liste des domaines principaux et/ou de la liste des sous-domaines sont comparées à au moins une caractéristique de référence afin de déterminer la validité des domaines, dans lequel la validité est établie si la caractéristique de validation extraite correspond à au moins une caractéristique de référence ;
dans lequel des caractéristiques de support (52) relatives à une apparence du domaine sont extraites des domaines de la liste des domaines principaux et/ou de la liste des sous-domaines et évaluées par une unité d'apprentissage automatique (53) afin de déterminer la validité des domaines ; et
dans lequel les caractéristiques de support (52) extraites des domaines valides, dont la validité a été déterminée sur la base des caractéristiques de validation (51), sont utilisées pour entraîner l'unité d'apprentissage automatique (53).

2. Procédé de détermination automatique et dynamique de systèmes informatiques selon la revendication 1, dans lequel au moins une caractéristique de référence est déterminée à partir d'une liste de caractéristiques de validation extraites (51), notamment par une métrique, où la caractéristique de référence est de préférence la plus fréquemment listée ; dans lequel chaque domaine de la liste des domaines principaux et/ou de la liste des sous-domaines qui possède une caractéristique de validation extraite qui correspond à la caractéristique de référence est considéré comme valide ; et en particulier, dans lequel chaque domaine de la liste des domaines principaux et/ou de la liste des sous-domaines qui possède une caractéristique de validation extraite qui ne correspond pas à la caractéristique de référence est considéré comme invalide.

3. Procédé de détermination automatique et dynamique de systèmes informatiques selon les revendications 1 ou 2, dans lequel la validité de chaque domaine de la liste des domaines principaux et/ou de la liste des sous-domaines pour lequel les caractéristiques de validation (51) sont indisponibles ou insuffisantes est déterminée par les caractéristiques de support extraites (52) de ce domaine au moyen de l'unité d'apprentissage automatique (53) ;
en particulier, dans lequel ce domaine est considéré comme valide si l'unité d'apprentissage automatique (53) prédit une probabilité supérieure à un seuil défini, et dans lequel ce domaine est configuré comme indéterminable si l'unité d'apprentissage automatique (53) prédit une probabilité inférieure à un seuil défini.

4. Procédé de détermination automatique et dynamique de systèmes informatiques selon la revendication 1, dans lequel les caractéristiques de validation extraites (51) sont classées en clusters et les caractéristiques de validation extraites (51) du cluster le plus fréquent correspondent aux caractéristiques de référence ; et dans lequel chaque domaine de la liste des domaines principaux et/ou de la liste des sous-domaines qui possède une caractéristique de validation extraite (51) qui correspond aux caractéristiques de référence est considéré comme valide.

5. Procédé de détermination automatique et dynamique de systèmes informatiques selon les revendications 1 et 4, dans lequel les caractéristiques de validation extraites (51) et les caractéristiques de support extraites (52) pour chaque domaine de la liste des domaines principaux et/ou de la liste des sous-domaines sont utilisées comme entrée pour l'algorithme d'apprentissage automatique (53) ; et en particulier dans lequel ce domaine est considéré comme valide si l'unité d'apprentissage automatique (53) prédit une probabilité supérieure à un premier seuil défini ; et/ou dans lequel ce domaine est considéré comme invalide si l'unité d'apprentissage automatique (53) prédit une probabilité inférieure à un deuxième seuil défini ; et/ou dans lequel ce domaine est considéré comme indéterminable si la probabilité se situe entre le premier seuil et le deuxième seuil.

6. Procédé de détermination automatique et dynamique de systèmes informatiques selon une des revendications précédentes, dans lequel les caractéristiques de validation (51) sont des informations relatives au propriétaire et/ou au cessionnaire du domaine, notamment des informations extraites des données Whois, d'un certificat, d'une mention légale et/ou de documents/sites web légalement obligatoires, par exemple une politique de confidentialité.

7. Procédé de détermination automatique et dynamique de systèmes informatiques selon une des revendications précédentes, dans lequel les caractéristiques de support (52) sont des informations relatives à l'apparence du domaine, notamment les informations extraites des feuilles de style en cascade (CSS), le vocabulaire utilisé et/ou au moins une icône de favori.

8. Procédé de détermination automatique et dynamique de systèmes informatiques selon une des revendications précédentes, comprenant une étape de recherche de nom de domaine (600), dans laquelle de nouveaux domaines principaux et/ou de nouveaux sous-domaines sont recherchés sur la base des domaines valides de la liste des domaines principaux et/ou des sous-domaines, en particulier dans lequel les informations des domaines valides sont utilisées pour obtenir par déduction les nouveaux domaines principaux avec des informations corrélées, de préférence à l'aide de techniques telles que Reverse Whois, Reverse Name Server, Reverse Mail Server, Used Technologies, ou des moteurs de recherche, comme Shodan Favicon Search.

9. Procédé de détermination automatique et dynamique de systèmes informatiques selon la revendication 8, dans lequel, pour chaque nouveau domaine principal :
- on vérifie si le nouveau domaine principal est résolvable et, s'il n'est pas résolvable, le nouveau nom de domaine est considéré comme non validable ; et/ou
- il est vérifié en effectuant l'étape de validation (500), notamment lorsque, si le nouveau nom de domaine principal est considéré comme invalide, l'opération est interrompue ;
notamment lorsque, si le nouveau nom de domaine principal est considéré comme valide, les sous-domaines sont énumérés en effectuant l'étape d'énumération des noms de sous-domaines (400), puis validés en effectuant l'étape de validation (500) et de nouveaux domaines principaux et de nouveaux sous-domaines sont recherchés en effectuant à nouveau l'étape de recherche de noms de domaine (600) sur les nouveaux sous-domaines valides ; et notamment lorsque,
si le nouveau domaine principal est considéré comme indéterminable, les sous-domaines sont énumérés en effectuant au moins partiellement l'étape d'énumération des noms de sous-domaines (400), puis validés en effectuant l'étape de validation (500) et le nouveau domaine principal est considéré comme valide si plus d'un pourcentage défini des sous-domaines énumérés est valide.

10. Procédé de détermination automatique et dynamique de systèmes informatiques selon une des revendications précédentes, comprenant une étape de recherche d'adresses IP (700), dans laquelle une liste d'adresses IP est générée en utilisant les domaines de la liste des domaines principaux et/ou de la liste des sous-domaines, comme entrée au moins une quatrième source de données (5), notamment un serveur DNS.

11. Procédé de détermination automatique et dynamique de systèmes informatiques selon la revendication 10, dans lequel les adresses IP des domaines valides de la liste des domaines principaux et/ou de la liste des sous-domaines sont résolues par accès à au moins une quatrième source de données (5), dans lequel il est vérifié pour chaque adresse IP si l'adresse IP pointe vers un domaine invalide,
si l'adresse IP pointe vers un domaine invalide de la liste de domaines principaux et/ou de la liste de sous-domaines, elle est considérée comme invalide,
lorsque l'adresse IP ne pointe pas vers un domaine invalide de la liste de domaines principaux et/ou de la liste de sous-domaines, elle est considérée comme valide.

12. Procédé de détermination automatique et dynamique de systèmes informatiques selon la revendication 11, dans lequel les domaines supplémentaires qui ne figurent pas dans la liste des domaines principaux et/ou la liste des sous-domaines sont résolus en utilisant l'adresse IP comme entrée pour au moins une quatrième source de données (5), dans lequel si il est vérifié, pour chaque adresse IP, si des domaines supplémentaires pointent vers l'adresse IP, Si aucun domaine ne pointe vers l'adresse IP, elle est considérée comme valide, sii des domaines supplémentaires pointent vers l'adresse IP, les domaines supplémentaires sont validés par l'étape de validation de domaine (500) afin de valider l'adresse IP,
en particulier, dans lequel une partie des domaines supplémentaires est validée par l'étape de validation de domaine (500),
si une partie des domaines supplémentaires est invalide, l'adresse IP est considérée comme invalide,
si toutes les parties des domaines supplémentaires sont valides, les domaines supplémentaires restants sont validés par l'étape de validation de domaine (500) et si ils sont valides, L'adresse IP est considérée comme valide, sinon l'adresse IP est considérée comme invalide.

13. Procédé de détermination automatique et dynamique de systèmes informatiques selon une des revendications précédentes, comprenant une étape de recherche de blocs réseau (800), dans laquelle une liste de blocs réseau est générée en utilisant le nom cible initial, les noms cibles supplémentaires, les domaines principaux et/ou les sous-domaines comme entrées d'au moins une cinquième source de données (6), notamment un registre Internet régional.

14. Système informatique (1) pour la détermination automatique et dynamique de systèmes d'information appartenant à une entité, configuré pour exécuter les étapes de la revendication 1.

15. Produit de programme informatique pour la détermination automatique et dynamique de systèmes d'information appartenant à une entité, qui, lorsqu'il est exécuté par un système informatique (1), amène le système informatique (1) à exécuter les étapes de la revendication 1.
